# EUROPEAN PATENT SPECIFICATION

(11) **EP 4 585 864 B1**
(45) Date of publication and mention of the grant of the patent: **05.08.2026**
(21) Application number: 24382024.8
(22) Date of filing: 11.01.2024
(51) Int. Cl.: F24S 10/70, F24S 23/00, F24S 80/30

(54) **A SPECTRAL SPLITTING DEVICE FOR A SOLAR CONCENTRATOR SYSTEM**
SPEKTRALTEILUNGSVORRICHTUNG FÜR EIN SONNENKONZENTRATORSYSTEM
DISPOSITIF DE DIVISION SPECTRALE POUR SYSTÈME DE CONCENTRATEUR SOLAIRE

(43) Date of publication of application: 16.07.2025
(73) Proprietor: Universitat de Lleida, 25003 Lleida (ES); Comet Global Innovation, S.L., 08012 Barcelona (ES)
(72) Inventor: SOLANS BARÓN, Alejandro, 25003 Lleida (ES); CHEMISANA VILLEGAS, Daniel, 25003 Lleida (ES); MORENO BELLOSTES, Alexandre, 25003 Lleida (ES); MAESTRO BALAGUER, Santiago, 25003 Lleida (ES); TEIXIDÓ GARCÍA, Oriol, 25003 Lleida (ES); MADRID GÓMEZ, Jaime, 25003 Lleida (ES); NÚÑEZ DE ARENAS NEGRETE, Joan, 08012 Barcelona (ES)
(74) Representative: ZBM Patents - Zea, Barlocci & Markvardsen

(56) References cited:
- CN-A- 107 449 163
- CN-U- 206 290 390
- GB-A- 2 572 383
- US-A1- 2015 053 266

## Description

The present disclosure relates to spectral splitting devices and solar concentrator systems comprising a plurality of said spectral splitting devices.

### BACKGROUND

Solar concentrator systems are widely used to recover solar light to transform it into heat and/or electricity. It is common to redirect solar rays using mirror systems comprising, for example, sets of rotatable mirrors, concentrating them onto a specific structure. The most common solar concentrator systems may be those having linear structures such as pipes (transporting a liquid therein such as, for example, water). Examples of such systems are Cylindrical Parabolic Concentrator (CPCs) systems or Linear Fresnel Solar Concentrator (LFSCs or shorter as in LFCs) systems, wherein primary optical elements such as mirrors are used to redirect the solar rays towards a specific spot or line.

Linear solar concentrators such as LFSCs using photovoltaic cells are exposed to high levels of overheating while in operation: on average, only 20% of incoming photons arriving at the linear structure are used to produce electricity by the photovoltaic cells, while the remaining 80% incoming photons heat up the panels and the surrounding structural elements.

Furthermore, in the case of LFSCs using photovoltaic cells, the cells only use a portion of the spectrum of the light reaching therein to convert sunlight into electricity. Furthermore, because of shape limitations, during the tracking of the sun, photovoltaic cells may not be able to capture the maximum amount of solar rays redirected therein. Therefore, since it is structurally difficult to manufacture photovoltaic cells with curved shapes, these types of systems rely on a large quantity of cells to cover the movement of the sun. All of this makes these types of linear solar concentrators inefficient and costly.

In a similar way, LFSCs using pipe conduits to heat liquid only use a portion of the spectrum to heat up the liquid therein, thus also rendering them inefficient.

Also, linear systems have other inherent problems: the maximum geometric concentration of a line produces losses, which can reduce to one-hundred times less the incoming sun energy. On top of that, in any type of linear-type solar concentrator systems, the receiving elements are placed nearby the mirrors (such as photovoltaic cells, optical fibers to reroute the incoming light, or liquid conduit pipes), and subject to extreme environmental conditions. At high temperatures, their performance drops and the expansion of the materials of, for example, PV cells or pipe-type conduits, produces gaps and cracks, resulting in damage on the systems.

US 2015/053266 A1 discloses a spectral splitting device for a solar concentrator system, wherein the solar concentrator system comprises a primary optical element, the spectral splitting device being configured to receive light from the primary optical element, and the spectral splitting device comprising: a body extending along an axis between an inlet end and an outlet end, and wherein the outlet end comprises a solar rays exit surface; and a through channel for conducting liquid, wherein the through channel is arranged between the inlet end and the outlet end, and wherein the through channel extends across the body to be crossed by the solar rays path.

The present disclosure provides examples of systems and methods that at least partially resolve some of the aforementioned disadvantages.

### SUMMARY

In a first aspect, a spectral splitting device for a solar concentrator system is disclosed. The solar concentrator system comprises a primary optical element. The spectral splitting device is configured to receive light from the primary optical element.

Furthermore, the spectral splitting device comprises:
- a tapered body extending along an axis between an inlet end and an outlet end, wherein a cross-section of the tapered body is greater at the inlet end than at the outlet end, wherein the inlet end comprises an inlet concentration surface to concentrate the incoming solar rays from the primary optical element towards the outlet end along a solar rays path, and wherein the outlet end comprises a solar rays exit surface; and
- a through channel for conducting liquid, wherein the through channel is arranged between the inlet end and the outlet end, and wherein the through channel extends across the body to be crossed by the solar rays path.

By using the spectral splitting device described above, a more efficient use of the incoming solar rays directed from a primary optical element (such as, for example, a set of mirrors) may be achieved.

A spectral splitting device according to the present disclosure may function as a secondary optical element (SOE, also known as receiver) mounted on the structure of a solar concentrator system.

A splitting device as presently disclosed is used to split the concentrated beam of light received from the primary optical element into two beams comprising a hot-light fraction and a cold-light fraction of the received light.

The splitting of the incoming light may be performed by conducting a liquid through the through channel of the splitting device. The liquid absorbs a hot-light fraction of the incoming light and let pass a cold-light fraction of the incoming light across the through channel and further along the solar ray path.

More precisely, the spectral splitting device optically guides the solar rays received by the inlet concentration surface, into the inlet end and through the body. The spectral splitting device may collect the cold-light photons flow of the incoming concentrated beam of light and direct them through the solar rays path to the solar rays exit surface at the outlet end of the body. The solar rays exit surface is on the opposite side to the inlet concentration surface that is configured to receive the incoming light.

Therefore, when the spectral splitting device is in use, incoming solar rays enter the splitting device through the inlet concentration surface and are routed along the established solar rays path therein. The solar rays path is thus defined between the inlet end and the outlet end. The incoming solar rays are thus directed from the inlet end to the outlet end. As the through channel is between the inlet and the outlet end, the incoming light crosses the through channel. This way, the energy of the part of the solar rays' spectrum producing heat (i.e., hot-light fraction, comprising, for example, the infrared spectrum) is used to heat up a liquid passing through the through channel. On the other hand, the remaining part of the incoming solar rays spectrum is able to cross the through channel. Then, it may be further redirected through the outlet end of the splitting device.

This way, a fluid passing through the spectral splitting device is heated up, which can be used for generating electricity. Furthermore, the transformation of the hot-light fraction (i.e., the heat-producing spectrum of the incoming light) into heat within the liquid passing through the through channel also avoids overheating the portion of the spectral splitting device nearby the outlet end, prolonging the lifespan of the connectors or any other device attached to or in the vicinity of the narrow end of the spectral splitting device.

Because of the body being tapered along an axis between the inlet end and the outlet end, the inlet end of the body has a wider cross-section than the outlet end of the body. Thus, the section changing from a wide section to a narrow section along the axis between the inlet end and the outlet end enhances the guiding of the incoming light entering the inlet end, and along the solar rays path and towards the outlet end. Therefore, the use of a spectral splitting device for collecting solar light allows a greater concentration of incoming solar rays which have a linear focus (coming from a solar concentrator system) to a single point (the light focus of the spectral splitting device). This way, the density of photonos is increased on the location of the spectral splitting device (i.e., its light focus), compared to existing solar concentrator systems having linear structures. Furthermore, by using a spectral splitting device as disclosed in the examples, the generation of electricity may be optimized and/or improved.

In some examples, the outlet end of the splitting device may be configured to be connected to an optical waveguide, which can be, for example, an optical fiber cable. This way, in use, the solar light exiting the outlet end of the splitting device can be routed to a remote location through the optical waveguide. This allows to, for example, produce electricity in a location remote from the splitting device, avoiding possible damages (due to overheating or extreme weather conditions) on any device for generating electricity, if it was to be installed in the vicinity of the outlet end of the splitting device.

In some other examples, the solar rays exit surface of the outlet end of the splitting device may be configured to be coupled to at least one photovoltaic cell panel. When using such panels, the total amount of photovoltaic cell panel surface is minimized due to the concentration of the incoming solar rays performed by the spectral splitting device.

The primary optical elements may be according to any of the examples herein, e.g. Parabolic Through Concentor systems or Linear Fresnel Concentrator systems.

In some examples, the tapered body may comprise at least two surfaces between the inlet end and the outlet end. A geometry comprising two surfaces may enhance the redirection of the incoming solar rays through the inlet end of the splitting device, thus helping to redirect the incoming solar rays in such a way that bounces and/or losses are decreased along the solar ray path. This way, the efficiency of energy transformation of the incoming solar rays may be increased.

In some examples, the at least two surfaces may comprise a first frontal surface and a second frontal surface. The second frontal surface may be arranged opposite to the first frontal surface. Furthermore, the through channel may extend between the first frontal surface and the second frontal surface.

Thus, the first frontal surface and the second frontal surface may span between the inlet end and the outlet end of the body of the splitting device. The first frontal surface may be opposite to the second frontal surface relative to the axis of the body. For example, the first frontal surface and the second frontal surface may be arranged in a way that the body may form a truncated pyramid structure. The truncated pyramid structure may be any type of prismatoid. This way, once the incoming light enters through the inlet concentration surface, the bouncing of light within the body of the splitting device may be diminished.

In some examples, the through channel may comprise an upper surface and a lower surface extending across the body, wherein the upper surface and the lower surface are configured to be crossed by the solar rays path. This way, the splitting of the incoming light in a hot-light fraction and a cold-light fraction may be achieved in a more efficient way, the spectral splitting device being able to redirect a substantial portion of the cold-light fraction towards the outlet end of the device, avoiding losses due to the incoming light bouncing within the through channel.

The upper surface and a lower surface may be arranged in opposite sides of the through channel, for example, parallel to each other, respectively of the direction of the through channel, defining a parallelepiped cross-section of the through channel.

In some examples, the tapered body may be made of a solid material. The tapered body may be manufactured using, for example, an optical glass which enhances dispersion of the incoming light, transmittance of incoming light, and has a low absorption of photons, thus increasing the efficiency of the spectral splitting device when in use. An example of optical glass may be BK7. Since BK7 performs well in all common post-manufacturing chemical tests, and no additional or special handling is required, costs of manufacturing are reduced. It is a relatively hard material with extremely low bubble and inclusion content, while providing high transmittance through-out the visible and near infrared spectra and down to 350 nm in the ultraviolet spectra.

In some examples, the inlet concentration surface may comprise a circular region. Furthermore, the region may have a three-dimensional conical shape, which may be any of, for example, a paraboloid, a hyperbolic paraboloid, an elipsoid, or a spherical cap shape. Any three-dimensional conical shape is defined by at least one focal point, thus enhancing the concentration of the light coming from a primary optical element. Such inlet concentration surface may thus increase the amount of solar rays collected by the spectral splitting device. Furthermore, the guiding of the incoming solar rays through the solar rays path may also be improved.

In a second aspect, a solar concentrator system is disclosed. The solar concentrator system comprises a primary optical element, and a plurality of spectral splitting devices according to any of the examples herein. The primary optical element is arranged to redirect solar rays to the plurality of spectral splitting devices.

In some examples, the solar concentrator system may further comprise an optical waveguide system, and wherein the solar rays exit surface of a set of spectral splitting devices of the plurality of spectral splitting devices may be coupled to the optical waveguide system.

In some examples, the optical waveguide system may comprise:
- one or more main portions; and
- a set of connecting portions, each of the connecting portions connecting the solar rays exit surface of one spectral splitting device of the set of spectral splitting devices to the one or more main portions.

In some examples, the optical waveguide system may comprise a set of main optical waveguides, each of them connected to one of the connecting portions.

In some examples, the optical waveguide system comprises a single main portion connected to the set of connecting portions. This way, each outlet of each splitting device may be connected to a connecting portion of an optical waveguide, and each connecting portion may be connected to a main optical waveguide, thus routing all the cold fraction light recovered by each splitting device into a single optical waveguide.

In some examples, at least one of the connecting portions forms a first angle between 0° and 45° relative to the axis of the tapered body. In order to avoid losses, the cold light fraction recovered by each splitting device may travel parallel to the ground until it reaches the target location (for example, a location where a PV system is located, in order to transform the recovered light into electricity). Therefore, due to the arrangement of the splitting devices of the solar concentrator system, a curve in each connecting portion is required, to connect them to a main portion. A gentle curve defined by the first angle ensures an optimal path of the recovered cold light fraction. Furthermore, it helps to minimize power loss when the light crosses over the intersection between the connecting portion and the main portion.

In some examples, at least one of the connecting portions may form a second angle between 120° and 150° relative the axis of the corresponding main portion. This may allow to increase the number of spectral splitting devices used in a solar concentrator system. Furthermore, the distance between spectral splitting devices may be reduced, thus rendering the solar concentrator system more efficient by being able to capture a larger amount of incoming light from the primary optical element.

In some examples, the optical waveguide system may comprise an optical fiber cable. For example, several optical fiber-based waveguides can be optical modelled having different geometric characteristics (numerical aperture, diameter, radius of curvature and longitude) and materials (plastic optical fibers and quartz-based optical fibers) which help increasing light transmission efficiency from the outlet end of the spectral splitting device and into a further device. The light travelling through the optical fiber cable can be used in, for example, a power generation facility comprising a plurality of PV cells to transform the incoming light travelling through the optical fiber into electricity.

In some examples, the solar concentrator system may further comprise a rotating system to rotate each of the spectral splitting devices about a rotation axis of the spectral splitting device so as to follow the solar rays redirected from the primary element. A rotating system may allow the rotation of the splitting devices to track the solar altitude variation along the day. The amount of collected incoming light from the primary optical element may thus be increased.

In some examples, the rotation axis of the spectral splitting device may be substantially perpendicular to the rotation axis of the primary element. This orientation may increase the amount of incoming solar light per day captured by the plurality of spectral splitting devices. Furthermore, the spectral splitting devices may rotate an angular displacement of 50° about the rotation axis of the spectral splitting device. This range of rotation displacement may optimize (i.e., allow to increase) the number of spectral splitting devices arranged in the solar concentrator system. Furthermore, it may also ensure an efficient redirection of solar rays coming from the primary optical element to the inlet concentration surfaces of each spectral splitting device.

In some examples, the rotating system may comprise a plurality of rotating actuators. Each of the rotating actuators may be coupled with one of the spectral splitting devices, thus allowing an individual rotation of each spectral splitting device. The rotating actuators may further enable to adapt the orientation of each individual spectral splitting device taking into account, for example, the different heights of the sun due to each season of the year.

In some examples, the rotating system may comprise a single rotating actuator to rotate the plurality of the spectral splitting devices. This way, a rotation of each splitting device may be achieved at the same time, simplifying the rotation system and reducing the cost of the overall system.

In some examples, the solar concentrator system may further comprise a supporting structure to support the plurality of spectral splitting devices.

In some examples, the spectral splitting devices may be aligned in a direction parallel to a rotation axis of the primary optical element. The primary optical element may comprise one or more mirror reflectors which are able to rotate following a rotation axis.

This way, the movement of the sun during the day can be traced, and the mirror reflectors may rotate following such movement, in order to redirect sunlight towards the plurality of spectral splitting devices in a more efficient way. Thus, the linear arrangement of the splitting devices in a direction parallel to the rotation axis of the primary optical element provides many benefits over other type of arrangement, including a lower manufacture cost and higher obtainable efficiency of the spectral splitting devices. A higher amount of incoming light may be received with such arrangement. Furthermore, an ease of manufacturing and installing the concentrator systems at scale is also achieved. Also, the fluid passing the through channels of each spectral splitting device can achieve higher temperatures in a concentrator system with such linear arrangement when compared to a flat-plate system having the same solar energy collecting surface.

In some examples, the rotation axis of at least one spectral splitting device may be substantially perpendicular to the rotation axis of the primary optical element. This way, the amount of incoming rays entering the spectral splitting device is maximized.

In some examples, the system may also comprise a liquid conduit assembly having a plurality of connecting liquid conduits. Each of the liquid conduits may connect the through-channels of consecutive spectral splitting devices of the plurality of spectral splitting devices. The connecting liquid conduit may be, for example, a flexible liquid conduit connecting each through-channel of each spectral splitting device. This way, a flow of liquid can be achieved over a plurality of spectral splitting devices, the fluid being able to retain a hot fraction of the incoming light when the system is in use, heating the liquid, which can be used to produce electricity.

In some examples, the through channel of the plurality of spectral splitting devices may be substantially perpendicular to the rotation axis of the primary optical element. This way, each channel may be connected with the channel of a consecutive spectral splitting device in a way in which eases the rotation of each spectral splitting device.

In some examples, the plurality of connecting liquid conduits may comprise a first set of connecting liquid conduits and a second set of connecting liquid conduits. The first set of connecting liquid conduits may connect a first frontal surface to a first frontal surface of two consecutive spectral splitting devices of the plurality of spectral splitting devices. Furthermore, the second set of connecting liquid conduits may connect a second frontal surface to a second frontal surface of two consecutive spectral splitting devices of the plurality of spectral splitting devices.

Furthermore, in some examples, the liquid conduit assembly comprises a meandering arrangement. Such arrangement may further increase the flexibility of the liquid conduit assembly and may enhance the ease of rotation of the spectral splitting devices. The meandering arrangement may increase the freedom of movement of each spectral splitting device. This way, the connecting liquid conduits may help to compensate the rotation of the spectral splitting devices. Furthermore, such meandering arrangement may maximize the temperature of the flow of liquid passing through the liquid conduit assembly.

Alternatively, an arrangement of the liquid conduit assembly may comprise the spectral splitting devices being arranged in a way wherein a common side for all the spectral splitting devices has a common liquid conduit which conducts the liquid into each through channel found in said common side. Furthermore, on the opposite common side of all the spectral splitting devices, a further common liquid conduit may connect all the through-channels of said opposite common side. This way, the flow of liquid may enter in parallel into each through-channel of each spectral splitting device through the common side of each channel and exit through the opposite common side of each channel. This arrangement may increase the volume of liquid passing through the through channels per time unit. This way, when using a type of liquid with a low heat capacity (i.e., it heats up faster than other liquids), a higher amount of liquid per time unit can be passed through the liquid conduit, and a higher efficiency of the solar concentrator system may be achieved.

The primary optical element may be according to any of the examples herein.

In some examples, the primary optical element may comprise mirror reflectors of a Linear Fresnel Concentrator System. The mirror reflectors can track the solar azimuth by rotation and redirect the incident sunlight irradiance to obtain a linear concentrated focal spot at a certain distance from the reflectors plane.

The Mirror Reflectors of a LFC system may comprise a plurality of curved mirrors (for example, with a semi-cylindrical shape), each mirror may be made of a highly reflective material and symmetrically positioned in respect of a linear structure. These mirrors may be mounted on support structures attached to a base frame incorporating a rotation system. This way, a guide connecting each mirror is able to translate the motion of a linear motor into rotational motion, thus rotating each mirror to follow the sun during the day.

The tilt angle of each curved mirror is generally calculated based on its location along an x-axis of the base frame, the position of the sun (azimuth and altitude) and the height of the secondary optical element.

In the solar concentrating systems known in the state of the art, spectral selective elements operate either by interference or by absorption. However, the spectral splitting device according to the present disclosure allows to use an absorptive liquid element which performs a dual function: spectral splitting and heat generation.

In other examples, the primary optical element may comprise at least one reflector of a Parabolic Through Concentrator system (PTC). PTC collectors reflect the incident solar radiation onto a focal line toward a linear structure comprising a pipe which absorbs the concentrated solar energy to raise the temperature of the fluid flowing inside it.

### BRIEF DESCRIPTION OF THE DRAWINGS

Non-limiting examples of the present disclosure will be described in the following, with reference to the appended drawings, in which:
Figure 1A and Figure 1B depict a view and a cross-section view of an example of the spectral splitting device, according to the present disclosure.
Figure 1C depicts a view of a further example of the spectral splitting device, according to the present disclosure.
Figure 2 depicts a perspective view of an example of the spectral splitting device, according to the present disclosure.
Figure 3A and Figure 3B depict two views of the example of the spectral splitting device of figure 2, according to the present disclosure.
Figure 4 depicts a perspective view of the inlet concentration surface of an example of a spectral splitting device, according to the present disclosure.
Figure 5 depicts a perspective view of an example of a solar concentrator system according to the present disclosure.
Figure 6 depicts a cross section view of a detail of an example of a solar concentrator system according to the present disclosure.
Figure 7 depicts a perspective view of a detail of an example of a solar concentrator system according to the present disclosure.

### DETAILED DESCRIPTION OF EXAMPLES

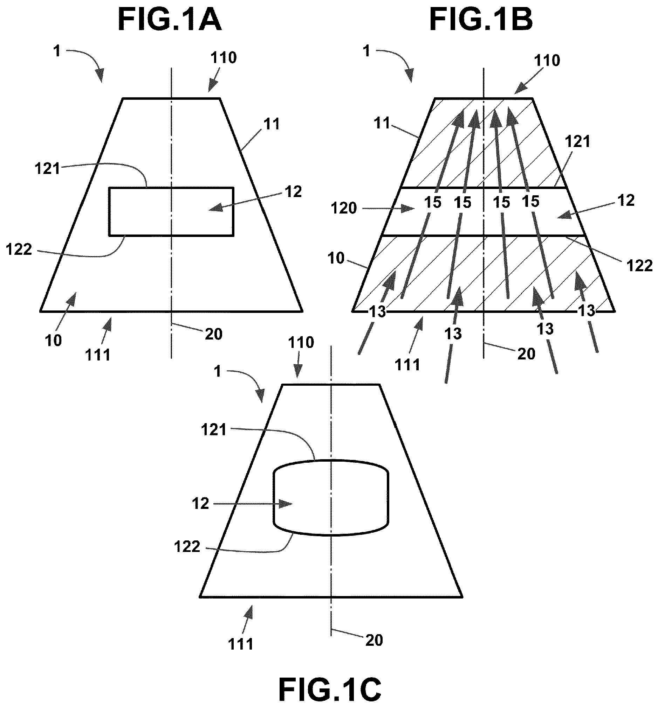

Figure 1A and 1B depict two views of an example of the spectral splitting device according to the present disclosure. Figure 1A depicts an example of the spectral splitting device 1 with a tapered body 11 comprising an inlet end 111, an outlet end 110, and a through channel 12 crossing the body 11 of the device 1. In this view, a first frontal surface 10 can be seen, and a second frontal surface opposite to the first frontal surface 10 (not shown) is occluded in this view of the device 1. Furthermore, the through channel 12 has an upper surface 121 and a lower surface 122, which are substantially perpendicular to the axis 20 formed by the inlet end 111 and the outlet end 110.

Figure 1B depicts a cross-section of the same example shown in figure 1A, the view of the device being rotated 90° respectively from the axis 20 between the inlet end 111 and the outlet end 110 of the device 1. In this view, the through channel 12 can be seen crossing the tapered body 11 of the device 1. In use, incoming solar rays 13 from a primary optical element enter through the inlet end 111 and travel along a solar rays path shown by arrows 15, crossing the through channel 12 and exiting the device 1 through outlet 110.

Furthermore, in use, a flow of liquid 120 such as water is driven along the through channel 12. Therefore, when incoming solar rays 13 pass through the solar rays path 15, the flow of liquid 120 is heated up and may be used to generate electricity. Furthermore, the remaining fraction of light which does not heat up the flow of liquid 120 can travel further along the solar rays path 15 to exit through the outlet end 110 of the device 1. Therefore, a splitting of the incoming solar rays 13 is achieved by passing the incoming solar rays 13 across the through channel 12. Also, the arrangement of the upper surface 121 and the lower surface 122 enhance the efficiency of the splitting, by maximizing the amount of incoming solar rays that reach the flow of liquid 120 within the through channel. This way, the heating of the flow of liquid 120 is maximized.

Furthermore, the remaining fraction of light exiting the spectral splitting device 1 can be further used to generate electricity, whether by connecting a photovoltaic panel coupled to the outlet end 110, or by transporting the remaining fraction of light by means of an optical waveguide, such as, for example, an optical fiber waveguide, the remaining fraction of light to be used to generate electricity in a remote location.

Figure 1C depicts a further example of the spectral splitting device 1, wherein the upper surface 121 and lower surface 122 are not perpendicular to the axis 20. In this example, upper surface 121 extends towards the outlet end 110, forming a concave outline. Also, the lower surface 122 extends outwards from the outlet end 110, forming a convex outline.

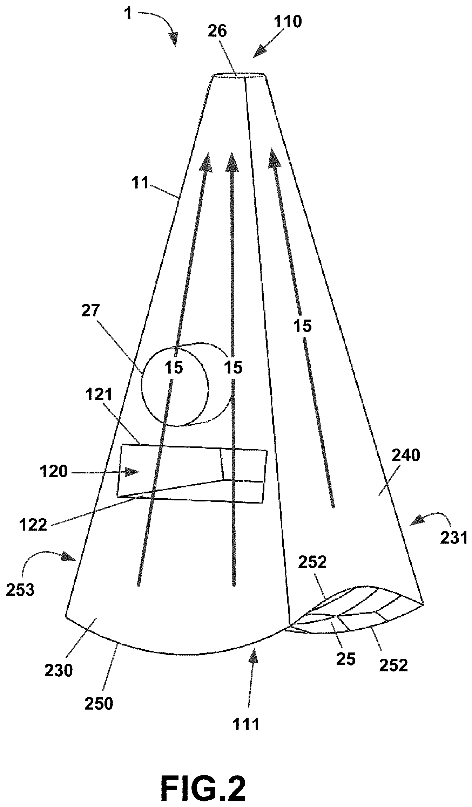

Figure 2 depicts an example of the spectral splitting device 1 according to the present disclosure. Spectral splitting device 1 is shown to have a pyramidal shaped body 11 extending along an axis 20 between an inlet end 111 and an outlet end 110. The body 11 of the device 1 comprises two opposite frontal surfaces, i.e. a first frontal surface 230 and a second frontal surface 231 (not shown, occluded in this view), and two opposite lateral surfaces, i.e. a first lateral surface 240 and a second lateral surface 241 (not shown, occluded in this view). Each of the first and second frontal surfaces 230, 231 and first and second lateral surfaces 240, 241 define an edge at the intersection with an inlet concentration surface 25 located at the inlet end 111.

As depicted in figure 2, an edge 250 is formed in the intersection of the first frontal surface 230 and inlet concentration surface 25, and an edge 251 is formed in the intersection of the second frontal surface 231 and inlet concentration surface 25. Both edges 250 and 251 extend outwards from the outlet end 110 of the device 1 forming a convex outline.

Also, an edge 252 is formed in the intersection of the first lateral surface 240 and inlet concentration surface 25, and an edge 253 (not shown, occluded in this view) is formed in the intersection of the second lateral surface 241 and inlet concentration surface 25. Both edges 252 and 253 extend inwards from the outlet end 110 of the device 1 forming a concave outline.

Furthermore, a solar rays path 15 can be seen crossing the interior of the device from the inlet end 111 to the outlet end 110. The solar rays path 15 is formed by the material of the device, which in this example is a synthetic polymer derived from methyl methacrylate, known as polymethyl methacrylate or PMMA. The material itself and the shape of the body 11 enable the solar rays entering the device through the inlet end 111 to travel along the body following the defined solar rays path 15. Also, a through channel 12 crossing the body 11 of the device 1 can be seen. In use, a flow of an absorbing spectral-selective liquid 120 may be passed through the channel 12, in order to split the incoming light (entering the inlet end 111, through the inlet concentration surface 25 of the device 1) into hot-light and cold-light fractions. Upon entering the inlet concentration surface 25, the incoming light may travel along the solar rays path 15, crossing the through-channel 12. The incoming light may enter the channel 12 through the lower surface 122. In the through channel 12, the flow of liquid 120 passing therein may transform a hot-light fraction of the incoming light into heat, thus heating the flow of liquid 120. Then, the remaining cold-light fraction of the incoming light may exit the through channel 12 through the upper surface 121, and it may continue travelling along the solar rays path 15 past the through-channel 12, reaching the outlet end 110. The remaining cold-light fraction may then exit through a solar rays exit surface 26 found at the outlet end 110 of the device 1, in order to be used to, for example, generate electricity by a PV cell. Alternatively, the remaining cold-light fraction may be transported by means of an optical waveguide system (such as an optical fiber system) to a remote location, to be used to generate electricity. This way, a splitting of the incoming light is achieved, making the most of the incoming light to generate electricity.

In order to increase the efficiency of the splitting of the incoming light, the design of the geometry of the body 11 of the spectral splitting device 1 can take into account fluid dynamics and heat transfer functions carried out by the specific absorbing spectral-selective liquid 120 found within the through-channel 12 when the splitting device 1 is in use.

Furthermore, device 1 also has a rotation shaft 27 to be coupled to a rotation system, in order to rotate the device when installed in a solar concentrator system.

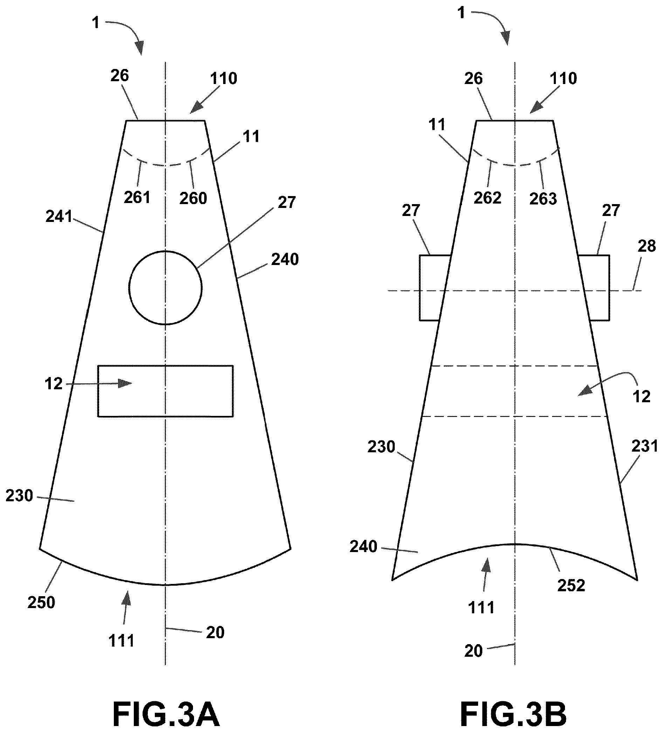

Figure 3A depicts a frontal view of the spectral splitting device 1 of figure 2, wherein the first frontal surface 230 is seen. First lateral surface 240 and second lateral surface 241 can be seen to be arranged having an angle of 260 and 261 respectively from the axis 20 of the tapered body 11 of the device 1.

Figure 3B depicts a lateral view of the spectral splitting device 1 of figure 2, wherein the first lateral surface 240 is seen. In this view, the first frontal surface 230 and second lateral surface 231 can be seen to be arranged having an angle of 262 and 263 respectively from the axis 20 of the tapered body 11 of the device 1.

The combination of angles 260, 261, 262, 263, edges 250, 251, 252, 253, and the shape of the inlet concentration surface 25 define how the incoming light is redirected through the solar rays path 15. Therefore, these parameters also enable the spectral splitting device 1 to define a solar rays path 15 which minimizes the bouncing of incoming light entering the device 1.

When an incoming light from a primary optical element enters the device 1 through the inlet concentration surface 25, the shape of the edges and the inlet concentrating surface 25 redirect the solar rays following solar rays path 15 which is enclosed in the body of the device, minimizing the internal bouncing of the light on any of the frontal 230, 231 or lateral surfaces 240, 241, thus maximizing the amount of solar rays crossing the through channel 12. Therefore, the amount of hot-fraction light of the incoming light used to heat the liquid 120 crossing the channel 12 is in turn maximized, and the amount of remaining cold-light fraction crossing the remaining part of the solar rays path 15 and exiting the device 1 through the solar rays exit surface 26 is also maximized (i.e., light losses between the upper surface 121 of the channel 12 and the solar rays exit surface 26 are minimized). This way, the efficiency of the generation of electricity when using device 1 is substantially increased.

Furthermore, both figures 3A and 3B show the rotation shaft 27, which protrudes both from the first frontal surface 230 and the second frontal surface 231. The rotation shaft 27 enables coupling the device 1 to a rotation system. In this example, the rotation system comprises a rotation actuator which can rotate the device along an axis 28, which is perpendicular to the axis 20. In this example, the rotation shaft is made of a metallic material and attached to the tapered body 11 of the spectral splitting device 1. This enables manufacturing the body 11 of the spectral splitting device 1 from a single block of material in an easy way. The body 11 can be manufactured either in a single piece or more pieces, and two portions of the rotation shaft 27 can be attached (for example, glued) to the frontal surfaces 230, 231 of the device 1 respectively. Alternatively, the shaft can be modelled in the same piece as the rest of the body 11 of the spectral splitting device.

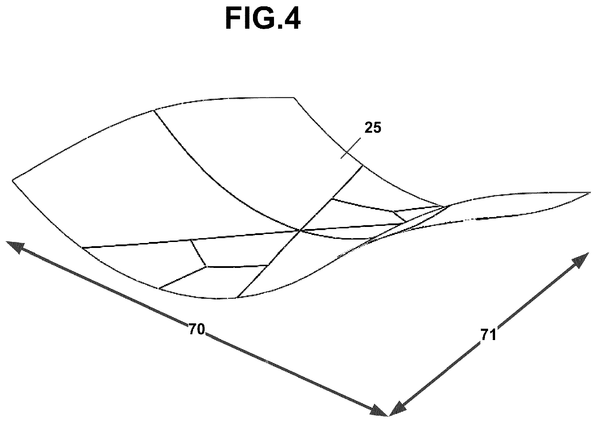

Figure 4 depicts the inlet concentration surface 25 of an example of the spectral splitting device 1. The shape of the inlet concentration surface 25 is designed to maximise the incoming light concentration efficiency of the spectral splitting device 1. It is also designed to optimize the coupling of the remaining cold light fraction (specifically, the collimated-like rays therein) exiting the device 1 (through a solar rays exit surface 26) with an optical waveguide. In this example, the optical waveguide is an optical fibre system. Also, the shape of the inlet concentration surface 25 helps reducing the size of the spectral splitting device 1.

In the example of figure 4, the shape of the inlet concentration surface 25 is modelled by calculating an equation defining the surface. The equation is calculated taking into account that the primary element concentrates solar rays in the transversal direction (XZ-plane, Z being defined by the axis 20 formed by the inlet end 111 and the outlet end 110 of the spectral splitting device 1). Since the inlet concentration surface 25 is designed to concentrate rays in the axial direction (YZ-plane) to a single focal point within the spectral splitting device 1, in this example, a width 70 of the inlet concentration surface 25 is defined as the width at the focal plane. Furthermore, to ensure homogeneity, the length 71 of the inlet concentration surface 25 is set to be the same as the width 70. The resulting shape, in this example, is a hyperbolic paraboloid.

This way, when incoming solar rays reach the inlet concentration surface 25 from the primary optical element, the solar rays are redirected upwards through the solar rays path 15. The hyperbolic paraboloid shape of the surface 25 enables redirecting the incoming solar rays coming with an angle respectively from the axis 20 or parallel to the axis 20, concentrating them in a single focal point within the device 1, and in the solar rays path 15. This concentration minimizes the bouncing of the incoming solar rays within the body 11 of the device 1, thus maximizing the concentration efficiency of the device 1.

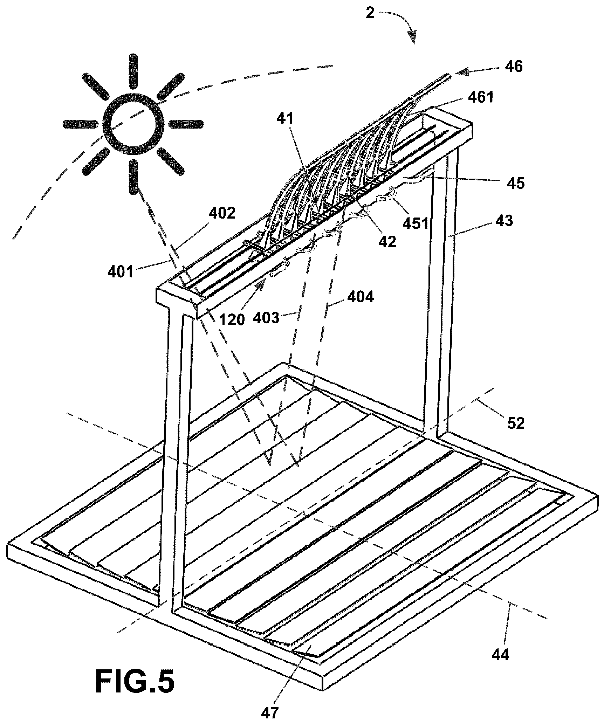

Figure 5 depicts a perspective view of an example of a solar concentrator system 2 according to the present disclosure. In this example, a Linear Fresnel Collector primary optical element 47. The solar concentrator system 2 also comprises a support 43 which has a plurality of spectral splitting devices 1 as disclosed herein, the devices 1 being arranged along an axis 52 perpendicular to the rotation axis 44 of the mirrors of the Linear Fresnel Collector primary optical element 47. This arrangement increases the amount of incoming solar rays that each device can capture from the primary optical element 47.

Each spectral splitting device 1 has its through channel 12 interconnected with the through channels 12 of each adjacent spectral splitting device 1 by means of a liquid conduit assembly 45, the assembly 45 having connecting portions 451 which connect each through channel 12 of each consecutive device 1. In this example, the connecting portions 451 are arranged in a meandering arrangement. Furthermore, the liquid conduit assembly 45 is connected to a liquid source (not shown) which drives a flow of liquid 120 (in this example, water) through the liquid assembly 45, thus making the flow of liquid 120 pass through all the channels 12 of each consecutive spectral splitting device 1, and the connecting portions 451 in between each device 1.

Each outlet end 110 of each spectral splitting device 1 is coupled to an optical waveguide system, which in this example comprises optical fiber 46. In this example, each outlet end 110 is connected to an optical fiber connecting portion 461, which in turn connects to a main portion of optical fiber 46.

The Linear Fresnel Collector primary optical element 47 has a set of rotating mirrors which are capable of redirecting sun rays (for example, 401, 402) towards a spectral splitting device (for example devices 41 and 42). This way, when sun rays 401, 402 are redirected towards each spectral splitting device 41 and 42, the reflected incoming sun rays 403, 404 enter each inlet end 111 of each corresponding spectral splitting device 41 and 42. Then, the incoming solar rays follow the corresponding solar rays path within each device 41, 42. When the incoming solar rays 403, 404 reach each corresponding through channel 12, the incoming sun rays 403, 404 split into a hot-light fraction and a cold-light fraction of the incoming sun rays 403, 404. The hot-light fraction transforms into heat, which heats the flow of liquid 120 which travels through the liquid assembly 45 passing each spectral splitting device 1. The heated flow of liquid 120 is driven along the liquid assembly 45, which can carry the heated liquid into a first electricity generation facility, to generate electricity using the heated liquid.

Furthermore, each remaining cold-light fraction keeps travelling along each solar rays path 15 towards the outlet end 110 of the corresponding device 41, 42. When exiting each device 41, 42, the remaining cold fraction light of each spectral splitting device 41, 42 is redirected by means of its coupling to the optical fiber system 46, and travels to a remote location. Therefore, a second electricity generation facility can recover the light travelling along the optical fiber system 46 to generate electricity in such remote location, reducing any possible damage made to the second electricity generation facility. Thus, damages on the second electricity generation facility caused by high temperatures or other extreme weather conditions happening in the surroundings of the solar concentrator system 2 are avoided.

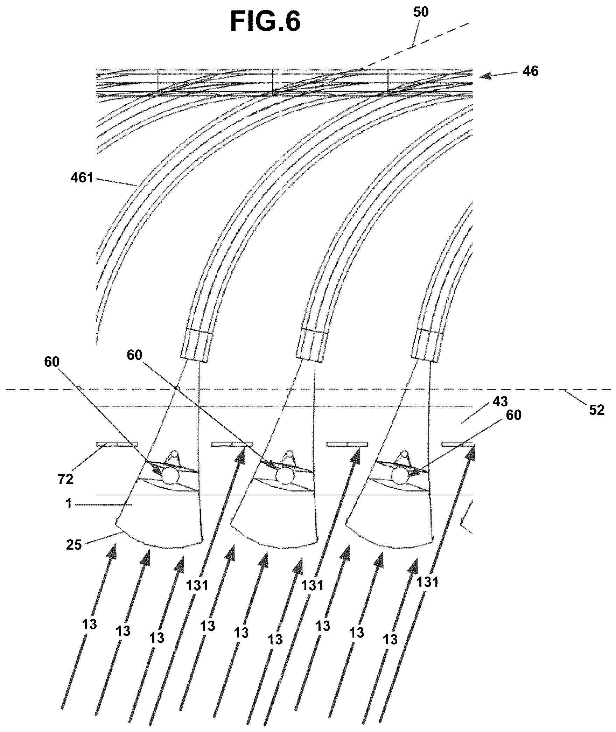

Figure 6 depicts a plurality of devices 1 arranged along an axis 52 perpendicular to the rotation axis 44 of the mirrors of the Linear Fresnel Collector primary optical element 47. The plurality of devices 1 is arranged in a support structure 43, each device 1 connected to an optical waveguide system 46. In this example, the optical waveguide system 46 comprises a plurality of optical fibre portions 461 each coupled to the outlet end 110 of each spectral splitting device 1. The plurality of optical fibre portions 461 form an optical fibre bundle, and each optical fibre portion 461 is used for transmitting the light exiting from each device 1. Figure 6 also depicts a rotating system 60 which is coupled to each rotation shaft 27 of each device 1. The rotating system is able to rotate each device 1 in order to capture the maximum amount of incoming solar rays 13 reflected by a primary element of a solar concentration system 2. Furthermore, the rotation system 60 is designed to minimize the gap between each spectral splitting device 1, in order to minimize leftover solar rays 131 that do not reach the inlet concentration surface 25 of each spectral splitting device 1. In this example, a plurality of photovoltaic cells 72 are arranged in between each device 1 in order to capture the leftover solar rays 131 that do not reach the inlet concentration surface 25 of each device 1. At the same time, the rotation system 60 is designed to allow the individual rotation of each device 1 without interfering with adjacent devices 1.

Furthermore, in this example each optical fibre portion 461 is coupled with each outlet end 110 of each device in such a way that, upon rotation, the angle between the axis 20 of each device and the axis 50 of each optical fibre portion 461 varies between 25° and 45°. Generally, optical fibre has a core surrounded by a transparent cladding material which has a lower index of refraction and light is kept in the core by means of total internal reflection (TIR). Therefore, an optical fibre portion 461 acts as a waveguide. It is also known that only light that enters an optical fibre within a certain range of angles is able to travel down the fibre without leaking out. Therefore, using the range of angles 25° and 45° ensures that no leaking occurs when the solar concentrator system 2 is in use. An optical fiber has a parameter known as numerical aperture (NA) of the fibre, corresponding to the sine of the maximum angle of the range of angles which avoid leaking within the optical fiber.

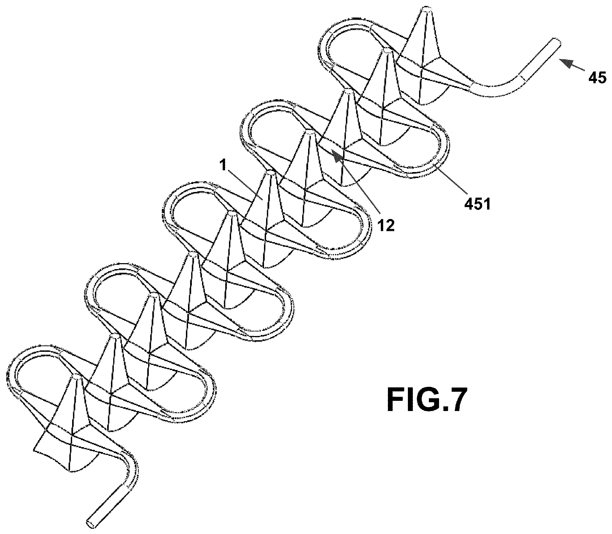

Figure 7 depicts a detail of the example of solar concentrator system shown in figure 5, wherein a view of a plurality of spectral splitting devices 1 and the liquid conduit assembly can be seen. In figure 7, the connection of each connecting portion 451 of liquid conduit of the liquid conduit assembly 45 can be seen. Each liquid conduit portion 451 is connected to each entry and exit of the through channel 12 of each consecutive device 1. Furthermore, it can be seen that the liquid conduit portions 451 are arranged in a meandering arrangement.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A spectral splitting device (1) for a solar concentrator system, wherein the solar concentrator system comprises a primary optical element, the spectral splitting device (1) being configured to receive light from the primary optical element, and the spectral splitting device comprising:
- a tapered body (11) extending along an axis (20) between an inlet end (111) and an outlet end (110), wherein a cross-section of the tapered body is greater at the inlet end (111) than at the outlet end (110), wherein the inlet end (111) comprises an inlet concentration surface (25) to concentrate incoming solar rays from the primary optical element towards the outlet end (110) along a solar rays path (15), and wherein the outlet end (110) comprises a solar rays exit surface (26); and
- a through channel (12) for conducting liquid, wherein the through channel (12) is arranged between the inlet end (111) and the outlet end (110), and wherein the through channel (12) extends across the body (11) to be crossed by the solar rays path (15).

2. A spectral splitting device (1) according to claim 1, wherein the tapered body (11) comprises at least two surfaces (230, 231, 240, 241) between the inlet end (111) and the outlet end (110).

3. A spectral splitting device (1) according to claim 2, wherein the at least two surfaces comprise:
- a first frontal surface (230); and
- a second frontal surface (231), the second frontal surface (231) arranged opposite to the first frontal surface (230); and
wherein the through channel (12) extends between the first frontal surface (230) and the second frontal surface (231).

4. A spectral splitting device (1) according to any of claims 2 or 3, wherein the tapered body (11) has a truncated pyramid structure.

5. A spectral splitting device (1) according to any of claims 1 to 4, wherein the through channel (12) comprises an upper surface (121) and a lower surface (122) extending across the body (11), wherein the upper surface (121) and the lower surface (122) are configured to be crossed by the solar rays path (15).

6. A spectral splitting device (1) according to any of claims 1 to 5, wherein the tapered body (11) is made of a solid material.

7. A spectral splitting device (1) according to claim 6, wherein the tapered body (11) is made of optical glass.

8. A spectral splitting device (1) according to claim 6, wherein the tapered body (11) is made of a synthetic polymer.

9. A spectral splitting device (1) according to claim 8, wherein the synthetic polymer is derived from methyl methacrylate.

10. A spectral splitting device (1) according to any of claims 3 to 9, wherein the inlet concentration surface (25) has a three-dimensional conical shape.

11. A spectral splitting device (1) according to any of claims 1 to 10, wherein the solar rays exit surface (26) is configured to be coupled to an optical waveguide (46).

12. A spectral splitting device (1) according to claim 11, wherein the optical waveguide (46) is an optical fiber.

13. A solar concentrator system (2) comprising:
- a primary optical element (47); and
- a plurality of spectral splitting devices (1) according to any of claims 1 to 12; wherein the primary optical element (47) is arranged to redirect solar rays to the plurality of spectral splitting devices (1).

14. A solar concentrator system (2) according to claim 13, further comprising an optical waveguide system (46), and wherein the solar rays exit surface (26) of a set of spectral splitting devices (1) of the plurality of spectral splitting devices (1) is coupled to the optical waveguide system (46).

15. A solar concentrator system (2) according to any of claims 13 or 14, further comprising a rotating system (60) to rotate each of the spectral splitting devices (1) about a rotation axis (28) so as to follow the solar rays redirected from the primary optical element (47).

## Patentansprüche

1. Eine Vorrichtung zur Spektralaufspaltung (1) für ein Solarkonzentratorsystem, wobei das Solarkonzentratorsystem ein primäres optisches Element umfasst, wobei die Vorrichtung zur Spektralaufspaltung (1) dazu konfiguriert ist, Licht von dem primären optischen Element zu empfangen, und die Vorrichtung zur Spektralaufspaltung Folgendes umfasst:
- einen sich verjüngenden Körper (11), der sich entlang einer Achse (20) zwischen einem Einlassende (111) und einem Auslassende (110) erstreckt, wobei ein Querschnitt des sich verjüngenden Körpers an dem Einlassende (111) größer ist als an dem Auslassende (110), wobei das Einlassende (111) eine Einlasskonzentrationsfläche (25) umfasst, um eintreffende Sonnenstrahlen von dem primären optischen Element in Richtung zu dem Auslassende (110) entlang eines Sonnenstrahlenpfads (15) zu konzentrieren, und wobei das Auslassende (110) eine Sonnenstrahlenaustrittsfläche (26) umfasst; und
- einen Durchgangskanal (12) zum Leiten von Flüssigkeit, wobei der Durchgangskanal (12) zwischen dem Einlassende (111) und dem Auslassende (110) angeordnet ist und wobei sich der Durchgangskanal (12) quer durch den Körper (11) erstreckt, um von dem Sonnenstrahlenpfad (15) gekreuzt zu werden.

2. Eine Vorrichtung zur Spektralaufspaltung (1) nach Anspruch 1, wobei der sich verjüngende Körper (11) mindestens zwei Flächen (230, 231, 240, 241) zwischen dem Einlassende (111) und dem Auslassende (110) umfasst.

3. Eine Vorrichtung zur Spektralaufspaltung (1) nach Anspruch 2, wobei die mindestens zwei Flächen Folgendes umfassen:
- eine erste Frontfläche (230); und
- eine zweite Frontfläche (231), wobei die zweite Frontfläche (231) gegenüber der ersten Frontfläche (230) angeordnet ist; und
wobei sich der Durchgangskanal (12) zwischen der ersten Frontfläche (230) und der zweiten Frontfläche (231) erstreckt.

4. Eine Vorrichtung zur Spektralaufspaltung (1) nach einem der Ansprüche 2 oder 3, wobei der sich verjüngende Körper (11) eine abgeschnittene Pyramidenstruktur aufweist.

5. Eine Vorrichtung zur Spektralaufspaltung (1) nach einem der Ansprüche 1 bis 4, wobei der Durchgangskanal (12) eine obere Fläche (121) und eine untere Fläche (122) umfasst, die sich quer durch den Körper (11) erstrecken, wobei die obere Fläche (121) und die untere Fläche (122) so ausgebildet sind, dass der Sonnenstrahlenpfad (15) sie kreuzt.

6. Eine Vorrichtung zur Spektralaufspaltung (1) nach einem der Ansprüche 1 bis 5, wobei der sich verjüngende Körper (11) aus einem festen Material hergestellt ist.

7. Eine Vorrichtung zur Spektralaufspaltung (1) nach Anspruch 6, wobei der sich verjüngende Körper (11) aus optischem Glas hergestellt ist.

8. Eine Vorrichtung zur Spektralaufspaltung (1) nach Anspruch 6, wobei der sich verjüngende Körper (11) aus einem synthetischen Polymer hergestellt ist.

9. Eine Vorrichtung zur Spektralaufspaltung (1) nach Anspruch 8, wobei das synthetische Polymer von Methylmethacrylat abgeleitet ist.

10. Eine Vorrichtung zur Spektralaufspaltung (1) nach einem der Ansprüche 3 bis 9, wobei die Einlasskonzentrationsfläche (25) eine dreidimensionale konische Form aufweist.

11. Eine Vorrichtung zur Spektralaufspaltung (1) nach einem der Ansprüche 1 bis 10, wobei die Sonnenstrahlenaustrittsfläche (26) dazu konfiguriert ist, an einen optischen Wellenleiter (46) gekoppelt zu werden.

12. Eine Vorrichtung zur Spektralaufspaltung (1) nach Anspruch 11, wobei der optische Wellenleiter (46) eine optische Faser ist.

13. Ein Solarkonzentratorsystem (2) umfassend:
- ein primäres optisches Element (47); und
- eine Vielzahl von Vorrichtungen zur Spektralaufspaltung (1) nach einem der Ansprüche 1 bis 12;
wobei das primäre optische Element (47) angeordnet ist, um Sonnenstrahlen zu der Vielzahl von Vorrichtungen zur Spektralaufspaltung (1) umzuleiten.

14. Ein Solarkonzentratorsystem (2) nach Anspruch 13, ferner umfassend ein optisches Wellenleitersystem (46), und wobei die Sonnenstrahlenaustrittsfläche (26) eines Satzes von Vorrichtungen zur Spektralaufspaltung (1) der Vielzahl von Vorrichtungen zur Spektralaufspaltung (1) an das optische Wellenleitersystem (46) gekoppelt ist.

15. Ein Solarkonzentratorsystem (2) nach einem der Ansprüche 13 oder 14, ferner umfassend ein Drehsystem (60), um jede der Vorrichtungen zur Spektralaufspaltung (1) um eine Drehachse (28) zu drehen, um den von dem primären optischen Element (47) umgeleiteten Sonnenstrahlen zu folgen.

## Revendications

1. Un dispositif de séparation spectrale (1) pour un système de concentration solaire, dans lequel le système de concentration solaire comprend un élément optique primaire, le dispositif de séparation spectrale (1) étant configuré pour recevoir de la lumière provenant de l'élément optique primaire, et le dispositif de séparation spectrale comprenant :
- un corps conique (11) s'étendant le long d'un axe (20) entre une extrémité d'entrée (111) et une extrémité de sortie (110), dans lequel une section transversale du corps conique est plus grande à l'extrémité d'entrée (111) qu'à l'extrémité de sortie (110), dans lequel l'extrémité d'entrée (111) comprend une surface de concentration d'entrée (25) pour concentrer des rayons solaires entrants de l'élément optique primaire vers l'extrémité de sortie (110) le long d'un trajet des rayons solaires (15), et dans lequel l'extrémité de sortie (110) comprend une surface de sortie de rayons solaires (26) ; et
- un canal traversant (12) pour conduire du liquide, dans lequel le canal traversant (12) est agencé entre l'extrémité d'entrée (111) et l'extrémité de sortie (110), et dans lequel le canal traversant (12) s'étend à travers le corps (11) pour être traversé par le trajet des rayons solaires (15).

2. Un dispositif de séparation spectrale (1) selon la revendication 1, dans lequel le corps conique (11) comprend au moins deux surfaces (230, 231, 240, 241) entre l'extrémité d'entrée (111) et l'extrémité de sortie (110).

3. Un dispositif de séparation spectrale (1) selon la revendication 2, dans lequel les au moins deux surfaces comprennent :
- une première surface frontale (230) ; et
- une seconde surface frontale (231), la seconde surface frontale (231) étant disposée à l'opposé de la première surface frontale (230) ; et
dans lequel le canal traversant (12) s'étend entre la première surface frontale (230) et la seconde surface frontale (231).

4. Un dispositif de séparation spectrale (1) selon l'une quelconque des revendications 2 ou 3, dans lequel le corps conique (11) a une structure pyramidale tronquée.

5. Un dispositif de séparation spectrale (1) selon l'une quelconque des revendications 1 à 4, dans lequel le canal traversant (12) comprend une surface supérieure (121) et une surface inférieure (122) s'étendant à travers le corps (11), dans lequel la surface supérieure (121) et la surface inférieure (122) sont configurées pour être traversées par le trajet des rayons solaires (15).

6. Un dispositif de séparation spectrale (1) selon l'une quelconque des revendications 1 à 5, dans lequel le corps conique (11) est réalisé en un matériau solide.

7. Un dispositif de séparation spectrale (1) selon la revendication 6, dans lequel le corps conique (11) est réalisé en verre optique.

8. Un dispositif de séparation spectrale (1) selon la revendication 6, dans lequel le corps conique (11) est réalisé en un polymère synthétique.

9. Un dispositif de séparation spectrale (1) selon la revendication 8, dans lequel le polymère synthétique est dérivé du méthacrylate de méthyle.

10. Un dispositif de séparation spectrale (1) selon l'une quelconque des revendications 3 à 9, dans lequel la surface de concentration d'entrée (25) a une forme conique tridimensionnelle.

11. Un dispositif de séparation spectrale (1) selon l'une quelconque des revendications 1 à 10, dans lequel la surface de sortie des rayons solaires (26) est configurée pour être couplée à un guide d'onde optique (46).

12. Un dispositif de séparation spectrale (1) selon la revendication 11, dans lequel le guide d'onde optique (46) est une fibre optique.

13. Un système de concentration solaire (2) comprenant :
- un élément optique primaire (47) ; et
- une pluralité de dispositifs de séparation spectrale (1) selon l'une quelconque des revendications 1 à 12 ;
dans lequel l'élément optique primaire (47) est agencé pour rediriger les rayons solaires vers la pluralité de dispositifs de séparation spectrale (1).

14. Un système de concentration solaire (2) selon la revendication 13, comprenant en outre un système de guide d'onde optique (46), et dans lequel la surface de sortie des rayons solaires (26) d'un ensemble de dispositifs de séparation spectrale (1) de la pluralité de dispositifs de séparation spectrale (1) est couplée au système de guide d'onde optique (46).

15. Un système de concentration solaire (2) selon l'une quelconque des revendications 13 ou 14, comprenant en outre un système rotatif (60) pour faire tourner chacun des dispositifs de séparation spectrale (1) autour d'un axe de rotation (28) de manière à suivre les rayons solaires redirigés à partir de l'élément optique primaire (47).
